# EUROPEAN PATENT APPLICATION

(11) **EP 4 755 618 A1**
(43) Date of publication of application: **10.06.2026**
(21) Application number: 25849209.9
(22) Date of filing: 26.03.2025
(51) Int. Cl.: B29D 30/06

(54) **POST-CURE INFLATION DEVICE AND TIRE PRODUCTION APPARATUS**

(30) Priority: 18.09.2024 CN 202422276376 U
(71) Applicant: ARP Technologies (Suzhou) Co., Ltd., Suzhou, Jiangsu 215216 (CN)
(72) Inventor: LIU, Baolong, Suzhou, Jiangsu 215216 (CN)
(74) Representative: Tiburzi, Andrea
(86) International application number: PCT/CN2025/085055
(87) International publication number: WO 2026/060921

(57) **Abstract**

Provided are a post-inflation apparatus and a tire manufacturing device. The post-inflation apparatus includes a frame (100), an upper crossbeam mechanism (200), a lower crossbeam mechanism (300), a leadscrew (1), a driving nut (2), a drive assembly (3), and a limiting assembly (4). The lower crossbeam mechanism (300) is disposed on the frame (100), and the upper crossbeam mechanism (200) and the lower crossbeam mechanism (300) cooperate to inflate a tire. The leadscrew (1) is slidably disposed on the frame (100) along a vertical direction, and the upper crossbeam mechanism (200) is disposed at a lower end of the leadscrew (1). The driving nut (2) is rotatably disposed on the frame (100) and threadedly engages with the leadscrew (1). The drive assembly (3) is disposed on the frame (100) and configured to drive the driving nut (2) to rotate forward and backward to drive the leadscrew (1) to ascend and descend. The limiting assembly (4) is disposed on the frame (100) and configured to limit rotation of the driving nut (2).

## Description

This application claims priority to Chinese Patent Application No. 202422276376.7 filed with the China National Intellectual Property Administration (CNIPA) on Sep. 18, 2024, the disclosure of which is incorporated herein by reference in its entirety.

### TECHNICAL FIELD

The present application relates to the technical field of tire manufacturing, for example, to a post-inflation apparatus and a tire manufacturing device.

### BACKGROUND

As a device used during the vulcanization process in tire manufacturing, a post-inflation apparatus is one of key devices that determine the quality of a tire. In the related art, hydraulic transmission is typically adopted for the post-inflation apparatus. The hydraulic transmission features fast response, high efficiency, and stepless speed regulation. However, the hydraulic transmission is prone to issues such as oil leakage and burst pipes, which may adversely affect the stability and safety of the post-inflation apparatus, thereby generating potential safety risks in the tire manufacturing process.

### SUMMARY

The present application provides a post-inflation apparatus and a tire manufacturing device so that the post-inflation apparatus can have better stability and safety, thereby avoiding potential safety risks in the tire manufacturing process.

The present application provides a post-inflation apparatus. The post-inflation apparatus includes a frame, an upper crossbeam mechanism, and a lower crossbeam mechanism, where the lower crossbeam mechanism is disposed on the frame, and the upper crossbeam mechanism and the lower crossbeam mechanism are configured to cooperate with each other to inflate a tire. The post-inflation apparatus further includes a leadscrew, a driving nut, a drive assembly, and a limiting assembly.

The leadscrew is slidably disposed on the frame along a vertical direction, and the upper crossbeam mechanism is disposed at a lower end of the leadscrew.

The driving nut is rotatably disposed on the frame and threadedly engages with the leadscrew.

The drive assembly is disposed on the frame and configured to drive the driving nut to rotate forward and backward to drive the leadscrew to ascend and descend.

The limiting assembly is disposed on the frame and configured to limit rotation of the driving nut.

The present application further provides a tire manufacturing device. The tire manufacturing device includes the above-described post-inflation apparatus and a transfer mechanism, and the transfer mechanism is configured to supply the tire to the post-inflation apparatus.

### BRIEF DESCRIPTION OF DRAWINGS

FIG. 1 is a first structural view of a post-inflation apparatus according to the present application.
FIG. 2 is a second structural view of a post-inflation apparatus according to the present application.
FIG. 3 is an enlarged view of part A in FIG. 2.
FIG. 4 is a structural view of a tire manufacturing device according to the present application.

### Reference list

- 100: frame
- 200: upper crossbeam mechanism
- 300: lower crossbeam mechanism
- 1: leadscrew
- 2: driving nut
- 3: drive assembly
- 31: transmission gear
- 32: driving gear
- 33: drive member
- 4: limiting assembly
- 41: limiting hole
- 42: limiting rod
- 43: power member
- 5: guiding assembly
- 51: sliding sleeve
- 52: sliding rod
- 6: post-inflation apparatus
- 7: transfer mechanism
- 8: tire manufacturing device

### DETAILED DESCRIPTION

In the present application, the term "comprising", "including", "having", or any other variation thereof is intended to encompass a non-exclusive inclusion so that a process, method, article, or apparatus that includes a series of elements not only includes those elements but also includes other elements that are not expressly listed or further includes elements that are inherent to such a process, method, article, or apparatus. Without further limitations, an element defined by the phrase "comprising a..." does not preclude the presence of additional identical elements in the process, method, article, or apparatus that includes this element.

In the present application, the term "and/or" is an association relationship describing associated objects and indicates that three relationships may exist. For example, when an apparatus is described as including A and/or B, it may represent the following three situations: the apparatus includes A; the apparatus includes both A and B; or the apparatus includes B. In addition, in the present application, the character "/" generally indicates an "and/or" relationship between associated objects before and after the character "/".

In the present application, the terms "connected", "combined", "coupled", or "mounted" may be directly connected, combined, coupled, or mounted and may also be indirectly connected, combined, coupled, or mounted. For example, the direct connection indicates that two parts or assemblies are connected together without an intermediate member, and the indirect connection indicates that two parts or assemblies are connected to at least one intermediate member, respectively, and the two parts or assemblies are connected through the intermediate members. In addition, "connection" and "coupling" may be physical or mechanical connections or couplings and may include electrical connections or couplings.

In the present application, those of ordinary skill in the art will understand that a relative term used in conjunction with quantities or conditions (for example, "about", "approximately", "basically", or the like) is inclusive of the stated value and has the meaning indicated by the context. For example, the relative term includes at least the degree of error associated with the measurement of a particular value, the tolerance resulting from manufacturing, assembly, and usage and associated with a particular value, and the like. Such a term is to be construed as disclosing a range defined by the absolute values of two endpoints. The relative term may refer to that an indicated value is added or reduced by a certain percentage (such as 1%, 5%, 10%, or more). A value not modified by the relative term should also be disclosed as a particular value with a tolerance. In addition, when expressing a relative angular position relationship (for example, substantially parallel or substantially perpendicular), "substantially" may refer to that a certain degree (such as 1 degree, 5 degrees, 10 degrees, or more) is added to or subtracted from the indicated angle.

In the present application, those of ordinary skill in the art will understand that the function implemented by an assembly may be implemented by one assembly or multiple assemblies. Similarly, the function implemented by a part may be implemented by one part or a combination of multiple parts.

In the present application, the terms "up", "down", "left", "right", "front", "rear", and other orientation words are described by the orientations and position relations shown in the drawings. In addition, in the context, when an element is connected "above" or "below" another element, the element can not only be directly connected "above" or "below" the other element but can also be indirectly connected "above" or "below" the other element through an intermediate element. Orientation words such as an upper side, a lower side, a left side, a right side, a front side, and a rear side not only represent perfect orientations but also may be understood as lateral orientations. For example, the term "below" may refer to "directly below", "on a lower left", "on a lower right", "on a front lower side", "on a rear lower side", and the like.

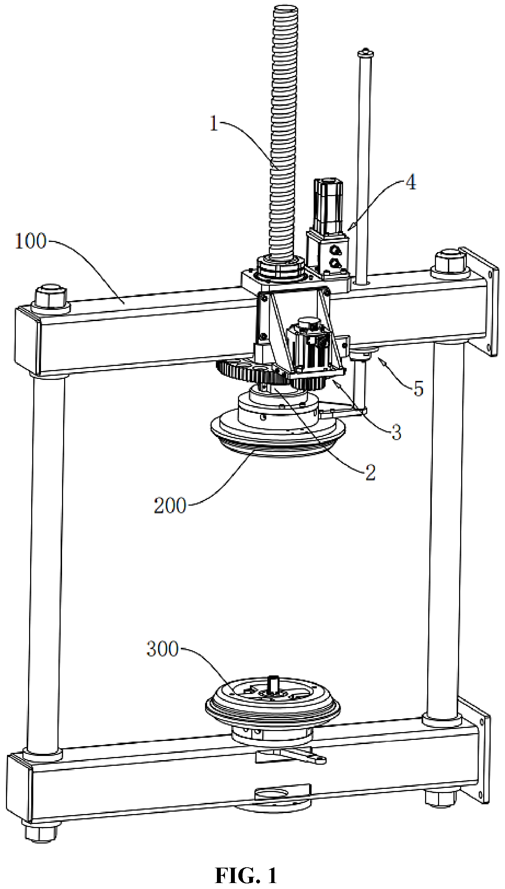

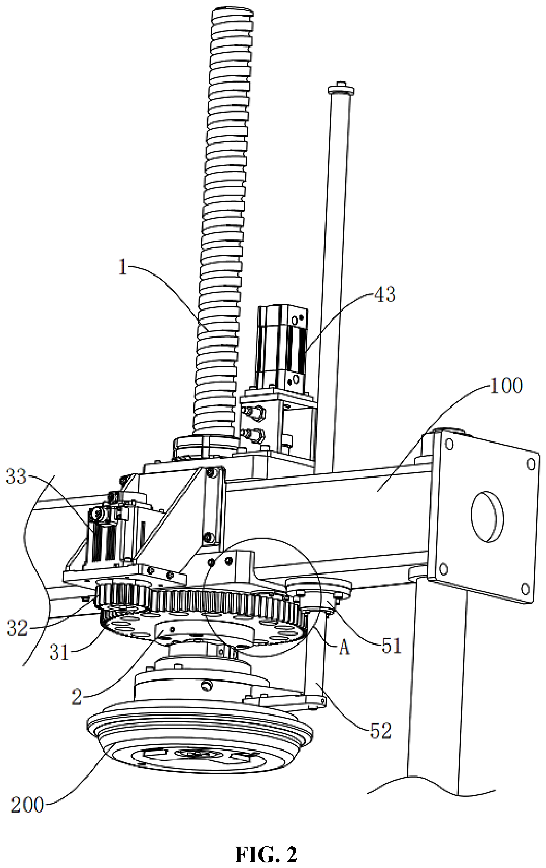

Referring to FIGS. 1 to 3, this embodiment provides a post-inflation apparatus. The post-inflation apparatus includes a frame 100, an upper crossbeam mechanism 200, and a lower crossbeam mechanism 300. The lower crossbeam mechanism 300 is disposed on the frame 100, and the upper crossbeam mechanism 200 and the lower crossbeam mechanism 300 can cooperate with each other to inflate a tire. The post-inflation apparatus further includes a leadscrew 1, a driving nut 2, a drive assembly 3, and a limiting assembly 4. The leadscrew 1 is slidably disposed on the frame 100 along a vertical direction, and the upper crossbeam mechanism 200 is disposed at a lower end of the leadscrew 1. The driving nut 2 is rotatably disposed on the frame 100 and threadedly engages with the leadscrew 1. The drive assembly 3 is disposed on the frame 100 and configured to drive the driving nut 2 to rotate forward and backward to drive the leadscrew 1 to ascend and descend. The limiting assembly 4 is disposed on the frame 100 and configured to limit rotation of the driving nut 2.

In practical applications, the tire is first placed on the lower crossbeam mechanism 300. The drive assembly 3 then drives the driving nut 2 to rotate, thereby causing the leadscrew 1 to move down. The leadscrew 1 drives the upper crossbeam mechanism 200 to move down, and when the upper crossbeam mechanism 200 is located in an operation position in which the upper crossbeam mechanism 200 can cooperate with the lower crossbeam mechanism 300 to inflate the tire, the limiting assembly 4 limits the rotation of the driving nut 2. Subsequently, the upper crossbeam mechanism 200 and the lower crossbeam mechanism 300 cooperate with each other to inflate the tire. After vulcanization is completed, the limiting assembly 4 releases the limitation on the driving nut 2, and the drive assembly 3 drives the driving nut 2 to rotate backward to drive the upper crossbeam mechanism 200 to reset.

Through the transmission structure formed by the leadscrew 1 and the driving nut 2, the post-inflation apparatus avoids issues associated with hydraulic transmission in the related art, such as oil leakage and burst pipes, which may compromise stability and safety. As a result, the post-inflation apparatus can have better stability and safety, thereby avoiding potential safety risks in the tire manufacturing process. The upper crossbeam mechanism 200 and the lower crossbeam mechanism 300 may employ structures well known to those skilled in the art, and therefore are not repeated.

Optionally, the drive assembly 3 includes a transmission gear 31, a driving gear 32, and a drive member 33. The transmission gear 31 is coaxially disposed on the driving nut 2. The driving gear 32 is rotatably disposed on the frame 100, and the transmission gear 31 meshes with the driving gear 32. The drive member 33 is disposed on the frame 100 and configured to drive the driving gear 32 to rotate forward and backward. The gear transmission structure formed by the transmission gear 31 and the driving gear 32 can enable the drive assembly 3 to have a more compact structure, high transmission efficiency, and high transmission precision.

In some embodiments, the drive member 33 is a servomotor, and the driving gear 32 is sleeved onto an output shaft of the servomotor. Employing the servomotor to drive the driving gear 32 to rotate can provide high efficiency, energy savings, and stable operation. The model of the servomotor may be selected according to the actual application scenario. In other embodiments, the drive member 33 may also be any mechanism having a rotation drive function in the related art, which is not repeated in detail.

Optionally, the limiting assembly 4 includes a limiting hole 41, a limiting rod 42, and a power member 43. The limiting hole 41 is provided on the transmission gear 31. The limiting rod 42 is slidably disposed on the frame 100 along the vertical direction, and a lower end of the limiting rod 42 can be inserted into the limiting hole 41. The power member 43 is disposed on the frame 100 and configured to drive the limiting rod 42 to ascend and descend. With this configuration, the lower end of the limiting rod 42 is inserted into the limiting hole 41, which can limit the rotation of the driving nut 2. The structure can be simple, and the operation cost can be low.

Any rotation angle of the driving nut 2 can correspondingly drive the leadscrew 1 to ascend and descend by a certain distance. In other words, the any rotation angle of the driving nut 2 can drive the upper crossbeam mechanism 200 to ascend and descend by the corresponding distance. Therefore, to precisely limit the upper crossbeam mechanism 200 to a preset operation position, in this embodiment, multiple limiting holes 41 are provided. The multiple limiting holes 41 are uniformly distributed around the circumference of the transmission gear 31 around the axis of the transmission gear 31.

To improve the convenience of inserting the lower end of the limiting rod 42 into the limiting hole 41, the lower end of the limiting rod 42 is chamfered to form a guiding surface. In other embodiments, the guiding surface may be provided at the opening of the limiting hole 41 to fulfill the same function, which is not repeated in this embodiment.

In some embodiments, the power member 43 is a pneumatic cylinder, a telescopic portion of the pneumatic cylinder moves along the vertical direction, and an upper end of the limiting rod 42 is connected to the telescopic portion. The pneumatic cylinder drives the limiting rod 42 to move so that the structure can be simple, and the operation cost can be low. In other embodiments, the power member 43 may be any linear drive mechanism in the related art, such as an electric cylinder or a linear module.

To improve the smoothness of the sliding movement of the upper crossbeam mechanism 200, the post-inflation apparatus further includes a guiding assembly 5. The guiding assembly 5 is disposed on the frame 100 and configured to guide the upper crossbeam mechanism 200 to ascend and descend. Optionally, the guiding assembly 5 includes a sliding sleeve 51 and a sliding rod 52. The sliding sleeve 51 is disposed on the frame 100. The sliding rod 52 slidably engages with the sliding sleeve 51, and a lower end of the sliding rod 52 is connected to the upper crossbeam mechanism 200.

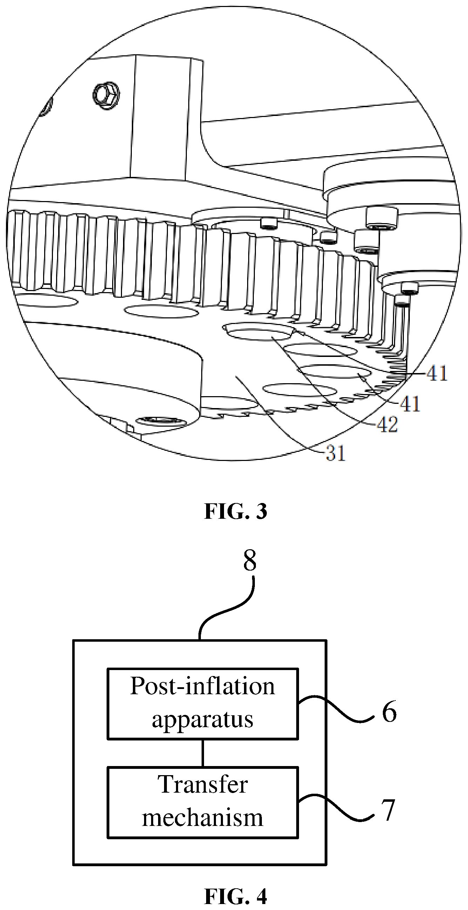

As shown in FIG. 4, this embodiment further provides a tire manufacturing device. The tire manufacturing device 8 includes the above-described post-inflation apparatus 6 and a transfer mechanism 7. The transfer mechanism 7 is configured to supply the tire to the post-inflation apparatus 6. The tire manufacturing device 8 including the post-inflation apparatus 6 can have better stability and safety, thereby avoiding the potential safety risks in the tire manufacturing process.

## Claims

1. A post-inflation apparatus, comprising a frame (100), an upper crossbeam mechanism (200), and a lower crossbeam mechanism (300),
wherein the lower crossbeam mechanism (300) is disposed on the frame (100), and the upper crossbeam mechanism (200) and the lower crossbeam mechanism (300) are configured to cooperate with each other to inflate a tire; and
wherein the post-inflation apparatus further comprises:
a leadscrew (1), wherein the leadscrew (1) is slidably disposed on the frame (100) along a vertical direction, and the upper crossbeam mechanism (200) is disposed at a lower end of the leadscrew (1);
a driving nut (2), wherein the driving nut (2) is rotatably disposed on the frame (100) and threadedly engages with the leadscrew (1);
a drive assembly (3), wherein the drive assembly (3) is disposed on the frame (100) and configured to drive the driving nut (2) to rotate forward and backward to drive the leadscrew (1) to ascend and descend; and
a limiting assembly (4), wherein the limiting assembly (4) is disposed on the frame (100) and configured to limit rotation of the driving nut (2).

2. The post-inflation apparatus according to claim 1, wherein the drive assembly (3) comprises:
a transmission gear (31) coaxially disposed on the driving nut (2);
a driving gear (32), wherein the driving gear (32) is rotatably disposed on the frame (100), and the transmission gear (31) meshes with the driving gear (32); and
a drive member (33), wherein the drive member (33) is disposed on the frame (100) and configured to drive the driving gear (32) to rotate forward and backward.

3. The post-inflation apparatus according to claim 2, wherein the drive member (33) is a servomotor, and the driving gear (32) is sleeved onto an output shaft of the servomotor.

4. The post-inflation apparatus according to claim 2, wherein the limiting assembly (4) comprises:
a limiting hole (41) provided on the transmission gear (31);
a limiting rod (42), wherein the limiting rod (42) is slidably disposed on the frame (100) along the vertical direction, and a lower end of the limiting rod (42) is insertable into the limiting hole (41); and
a power member (43), wherein the power member (43) is disposed on the frame (100) and configured to drive the limiting rod (42) to ascend and descend.

5. The post-inflation apparatus according to claim 4, wherein a plurality of limiting holes (41) are provided, and the plurality of limiting holes (41) are uniformly distributed around a circumference of the transmission gear (31) around an axis of the transmission gear (31).

6. The post-inflation apparatus according to claim 4, wherein the power member (43) is a pneumatic cylinder, a telescopic portion of the pneumatic cylinder moves along the vertical direction, and an upper end of the limiting rod (42) is connected to the telescopic portion.

7. The post-inflation apparatus according to claim 4, wherein the lower end of the limiting rod (42) is chamfered to form a guiding surface.

8. The post-inflation apparatus according to claim 1, further comprising:
a guiding assembly (5), wherein the guiding assembly (5) is disposed on the frame (100) and configured to guide the upper crossbeam mechanism (200) to ascend and descend.

9. The post-inflation apparatus according to claim 8, wherein the guiding assembly (5) comprises:
a sliding sleeve (51) disposed on the frame (100); and
a sliding rod (52), wherein the sliding rod (52) slidably engages with the sliding sleeve (51), and a lower end of the sliding rod (52) is connected to the upper crossbeam mechanism (200).

10. A tire manufacturing device, comprising the post-inflation apparatus (6) according to any one of claims 1 to 9 and a transfer mechanism (7), wherein the transfer mechanism (7) is configured to supply the tire to the post-inflation apparatus (6).
